Europäisches Patentamt

European Patent Office

Office européen des brevets

(19)

(11)  EP 0 775 390 B1

(12)  FASCICULE DE BREVET EUROPEEN

(45) Date de publication et mention
de la délivrance du brevet:
**04.09.2002  Bulletin 2002/36**

(21) Numéro de dépôt: **96922101.9**

(22) Date de dépôt: **12.06.1996**

(51) Int Cl.⁷: **H04B 3/14**

(86) Numéro de dépôt international:
**PCT/FR96/00888**

(87) Numéro de publication internationale:
**WO 97/000560 (03.01.1997 Gazette 1997/02)**

(54) **DISPOSITIF DE CORRECTION DE LA CARACTERISTIQUE AMPLITUDE/FREQUENCE D'UN SIGNAL AYANT TRANSITE PAR UN CABLE ET EGALISEUR FREQUENTIEL CORRESPONDANT**

GERÄT ZUM KORRIGIEREN DER AMPLITUDEN-/FREQUENZCHARAKTERISTIK EINES EIN KABEL DURCHLAUFENDEN SIGNALS UND ENTSPRECHENDER FREQUENZENTZERRER

DEVICE FOR CORRECTING THE AMPLITUDE/FREQUENCY CHARACTERISTIC OF A SIGNAL FROM A CABLE, AND FREQUENCY EQUALISER THEREFOR

(84) Etats contractants désignés:
**DE ES GB IT SE**

(30) Priorité:  **14.06.1995  FR 9507072**

(43) Date de publication de la demande:
**28.05.1997   Bulletin 1997/22**

(73) Titulaire: **ALCATEL TELSPACE**
**92734 Nanterre Cédex (FR)**

(72) Inventeurs:
• **COMTE, Michel**
**F-95130 Franconville (FR)**

• **ROCHE, Nathalie**
**F-78700 Conflans-Ste-Honorine (FR)**

(74) Mandataire: **El Manouni, Josiane et al**
**COMPAGNIE FINANCIERE ALCATEL,**
**Département Propriété Industrielle,**
**30, avenue Kléber**
**75116 Paris (FR)**

(56) Documents cités:
**GB-A- 2 000 933          US-A- 4 413 240**

EP 0 775 390 B1

## Description

Le domaine de l'invention est celui des systèmes de transmission et concerne plus précisément un dispositif d'égalisation de la caractéristique amplitude/fréquence d'un signal large bande présentant une caractéristique d'atténuation en fonction de la fréquence croissante entre ses fréquences maximales et minimales. Une application préférentielle de l'invention est la correction d'un signal ayant transité par un câble de transmission et la description suivante se place dans ce cadre.

La transmission par câble d'un signal en hyperfréquence ou en fréquence intermédiaire pose le problème connu de déformation du signal à l'extrémité de réception. Le signal transmis qui, à l'émission, présente une symétrie autour de la fréquence centrale (fréquence intermédiaire ou hyperfréquence), présente, à la réception, une dissymétrie caractérisée par des amplitudes du signal reçu différentes en-deçà et au-delà de la fréquence centrale. Il faut alors redonner, à la réception, au spectre déformé sa forme originelle, symétrique, à l'aide d'un égaliseur fréquentiel. La fonction d'un égaliseur fréquentiel est donc de modifier le spectre d'un signal reçu pour compenser la caractéristique d'atténuation du câble qui est une caractéristique croissante en fonction de la fréquence.

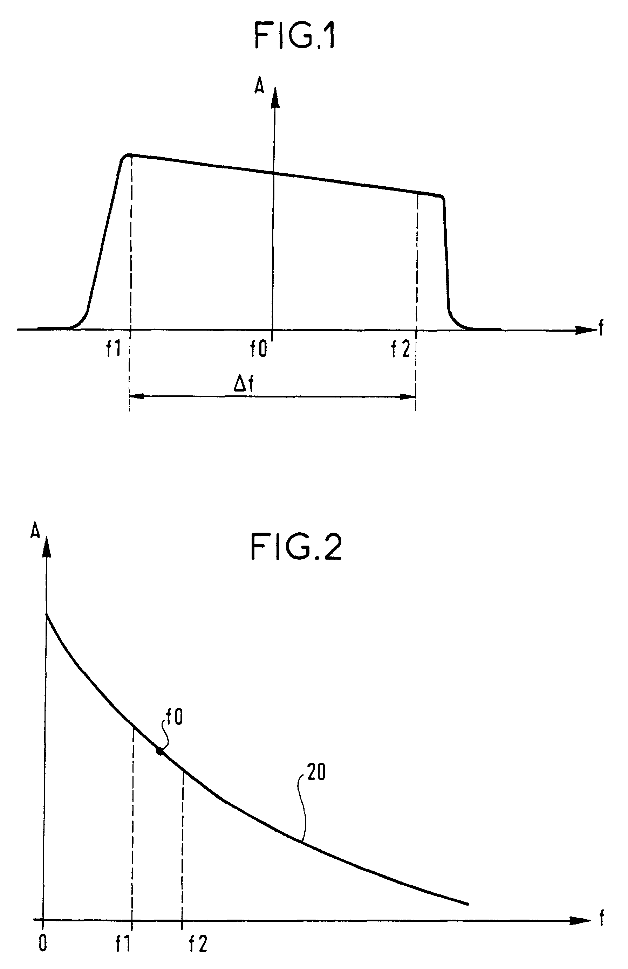

La figure 1 représente le spectre d'un signal en fréquence intermédiaire affecté d'une penchette, c'est à dire d'une dissymétrie de caractéristique amplitude/fréquence. La fréquence centrale, correspondant à la fréquence intermédiaire, est notée f0, les fréquences minimales et maximales respectivement f1 et f2. La largeur de bande $\Delta f$, égale à f2-f1, est due à la modulation. Les amplitudes des fréquences inférieures et supérieures à f0 ne sont pas égales, ce qui caractérise la penchette.

La figure 2 représente la caractéristique d'atténuation d'un câble, par exemple celle d'un câble coaxial, en fonction de la fréquence. La caractéristique 20 présente une atténuation en $x.\sqrt{f/Fo}$ due aux propriétés du câble assurant la transmission. La valeur de x s'exprime en dB/m et correspond à l'atténuation d'amplitude d'un signal de fréquence Fo. On constate que les fréquences f1 et f2 ne sont pas atténuées de la même manière, ce qui génère le défaut d'amplitude.

Comme indiqué précédemment, la caractéristique amplitude/fréquence d'un signal peut être corrigée à l'aide d'un égaliseur fréquentiel, par exemple auto-adaptatif. Un exemple d'égaliseur frequentiel auto-adaptatif comportent deux filtres en cascade est décrit dans la demande de brevet n. GB 2000933 publiée le 17.01. 1979. Tout égaliseur fréquentiel auto-adaptatif comporte un dispositif de correction, par exemple un filtre transverse, recevant un signal d'entrée et fournissant un signal de sortie corrigé à un estimateur de la caractéristique amplitude/fréquence de ce signal de sortie. L'estimateur pilote le filtre transverse pour corriger cette caractéristique.

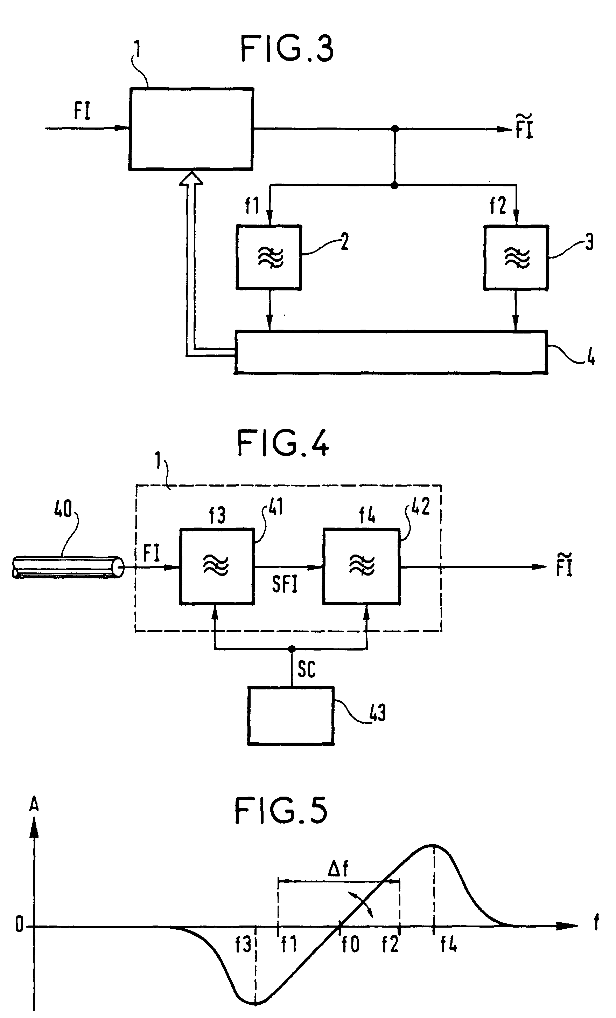

La figure 3 représente la structure d'un tel égaliseur fréquentiel.

Un signal FI en fréquence intermédiaire est appliqué à l'entrée d'un dispositif de correction dont la sortie est constituée par un signal en fréquence intermédiaire $\bar{F}$I à caractéristique amplitude/fréquence corrigée. Ce signal $\bar{F}$I est appliqué à deux filtres bande étroite 2, 3 dont les fréquences centrales, respectivement f1 et f2, sont dans le spectre du signal FI tel que représenté à la figure 1.

Les amplitudes des signaux issus des filtres 2 et 3 rendent compte de la déformation du spectre et il est ainsi possible de piloter le dispositif de correction 1 pour que l'amplitude des signaux qu'il délivre soit sensiblement identique autour de la fréquence f0. La commande du dispositif 1 est assurée par des moyens de traitement 4 qui génèrent des coefficients de correction appliqués au filtre 1. Le filtre 1, les filtres bande étroite 2 et 3 et les moyens de traitement 4 forment un égaliseur fréquentiel fonctionnant en fréquence intermédiaire. On corrige ainsi la réponse amplitude/fréquence du milieu de propagation ou alors la caractéristique amplitude/fréquence du signal traité et le spectre corrigé est plat et symétrique entre f1 et f2, c'est à dire exempt de penchette.

Le signal corrigé $\bar{F}$I peut ensuite être appliqué à un amplificateur dont le gain est déterminé par un dispositif à commande automatique de gain, cet amplificateur fournissant un signal d'amplitude constante. L'amplificateur peut être suivi de moyens de transposition de fréquence, tels que des mélangeurs recevant deux signaux en quadrature de phase d'un oscillateur local fonctionnant à la fréquence intermédiaire f0.

Le dispositif de correction précité est habituellement constitué par un filtre transverse, ou un circuit résonnant dont la fréquence de résonance et la surtension sont modifiables par les moyens de traitement 4.

L'inconvénient de ces deux types de dispositifs de correction est qu'ils introduisent soit un temps de propagation de groupe (dans le cas de circuits résonnants), soit que leur structure est complexe (dans le cas d'un filtre transverse).

Plus généralement, un inconvénient des égaliseurs fréquentiels utilisés est qu'il est nécessaire de connaitre très précisément la largeur de bande $\Delta f$ du signal à corriger pour permettre l'ajustement des fréquences centrales des filtres 2 et 3. On ne peut dans ce cas pas modifier la largeur de bande du signal à l'émission, c'est à dire le débit transmis.

La présente invention a notamment pour objectif de pallier ces inconvénients.

Plus précisément, un des objectifs de l'invention est de fournir un dispositif de correction de la caractéristique amplitude/fréquence d'un signal présentant une caractéristique d'atténuation en fonction de la fréquence croissante entre ses fréquences minimales et maximales, typiquement un signal issu d'un câble de transmission, ce dispositif ne présentant pas de temps de propagation de groupe dans la bande utile.

Un autre objectif de l'invention est de fournir un égaliseur fréquentiel employant un tel dispositif de correction, cet égaliseur présentant une structure acceptant une modification du débit transmis.

Ces objectifs, ainsi que d'autres qui apparaîtront par la suite, sont atteints grâce à un dispositif de correction de la caractéristique amplitude/fréquence d'un signal d'entrée de fréquence minimale f1, de fréquence centrale f0 et de fréquence maximale f2, le signal d'entrée présentant une caractéristique d'atténuation en fonction de la fréquence croissante entre f1 et f2, le dispositif de correction fournissant un signal de sortie corrigé, ce dispositif comportant deux filtres en cascade, le premier des filtres recevant le signal d'entrée et fournissant un signal filtré au second des filtres, le second des filtres fournissant le signal de sortie corrigé, l'un des filtres étant un filtre réjecteur de bande de fréquence centrale f3, avec f3 inférieur ou égal à f1. l'autre des filtres étant un filtre passe-bande de fréquence centrale f4, avec f4 supérieur ou égal à f2, les fréquences centrales f3 et f4 respectant la relation :

$$f3 \times f4 = f0^2$$

les filtres étant de même ordre et leurs coefficients de surtension étant réglés par un signal de commande issu d'un dispositif de commande.

Le signal de commande est préférentiellement un signal de commande automatique de gain issu d'un dispositif de commande automatique de gain.

Les filtres utilisés sont avantageusement du premier ordre afin de limiter l'atténuation apportée et peuvent par exemple être réalisés chacun à partir de cellules de type LC.

Chacun de ces filtres peut coopérer avec une diode de type PIN afin de permettre un réglage de leurs coefficients de surtension.

Le signal d'entrée est préférentiellement un signal ayant transité par un câble.

L'invention concerne également un égaliseur fréquentiel comprenant un tel dispositif de correction.

D'autres caractéristiques et avantages de l'invention apparaîtront à la lecture de la description suivante d'un mode de réalisation préférentiel, donné à titre illustratif et non limitatif, et des dessins annexés, dans lesquels :

- la figure 1 représente le spectre d'un signal en fréquence intermédiaire affecté d'une penchette ;
- la figure 2 représente la caractéristique d'atténuation d'un câble en fonction de la fréquence ;
- la figure 3 représente la structure générale d'un égaliseur fréquentiel ;
- la figure 4 est un schéma synoptique d'un dispositif de correction selon l'invention ;

- la figure 5 représente la courbe de réponse du dispositif de correction selon l'invention ;
- la figure 6 représente un mode de réalisation préférentiel du dispositif de correction selon l'invention ;
- la figure 7 représente un estimateur destiné à piloter le dispositif de correction selon l'invention.

Les figures 1 à 3 ont été décrites précédemment en référence à l'état de la technique. La figure 4 est un schéma synoptique d'un dispositif de correction selon l'invention.

Le dispositif de correction de la figure 4 est généralement référencé par 1 et reçoit en entrée un signal FI (ici un signal en fréquence intermédiaire) issu d'un câble 40, constitué par exemple par un câble coaxial.

Le dispositif 1 comporte deux filtres en cascade, respectivement référencés 41 et 42. Le premier filtre 41 reçoit le signal d'entrée FI et fournit un signal filtré SFI au second filtre 42, ce second filtre fournissant le signal de sortie corrigé $\bar{F}$I.

Selon l'invention, l'un de ces filtres, ici le premier filtre 41, est un filtre réjecteur de bande de fréquence centrale f3, avec f3 inférieur ou égal à f1, l'autre filtre, ici le second filtre 42, étant un filtre passe-bande de fréquence centrale f4, avec f4 supérieur ou égal à f2. Les filtres 41 et 42 sont du même ordre, par exemple du premier ordre, et les fréquences centrales f3 et f4 respectent la relation $f3 \times f4 = f0^2$, avec f0 la fréquence centrale du signal FI à corriger.

Les coefficients de surtension des filtres 41 et 42 sont réglés par un signal de commande SC issu d'un dispositif de commande 43.

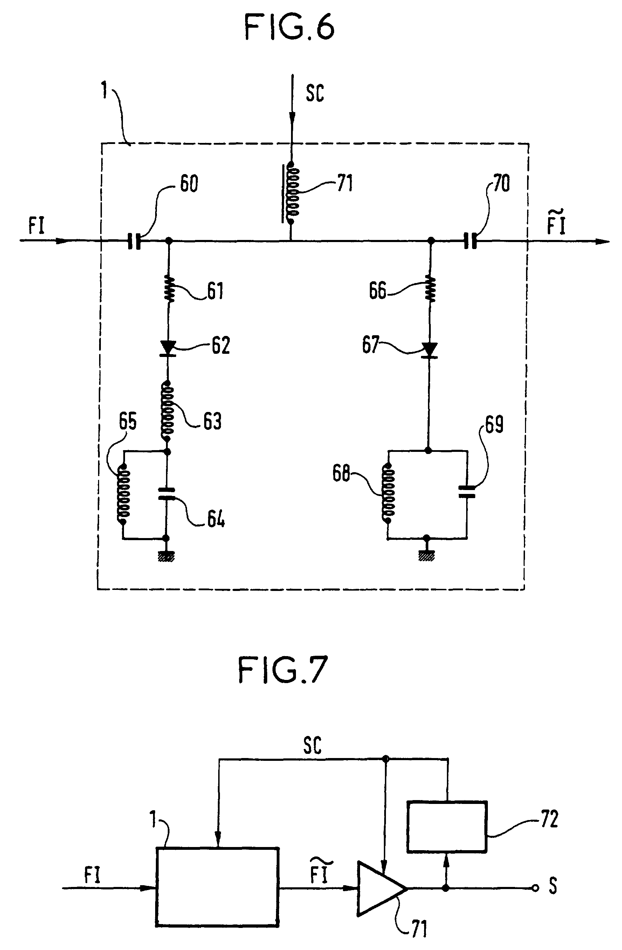

La figure 5 représente la courbe de réponse fréquentielle résultant de la mise en cascade de ces deux filtres.

Le filtre réjecteur de bande 41 a comme fréquence centrale f3 et le filtre passe-bande 42 a comme fréquence centrale f4. Ces fréquences centrales sont disposées de part et d'autre de la largeur de bande Δf égale à f2-f1. La mise en cascade d'un filtre réjecteur de bande et d'un filtre passe-bande de mêmes ordres permet d'obtenir une caractéristique d'atténuation en fonction de la fréquence de pente opposée à celle du signal FI à corriger (voir fig. 1). Les coefficients de surtension des filtres sont égaux et ajustables, ce qui permet d'incliner la caractéristique d'atténuation en fonction de la fréquence autour de f0, c'est à dire dans la bande Δf, et par là même de compenser parfaitement la caractéristique amplitude/fréquence du signal FI.

En pratique, on aura intérêt à ce que les fréquences f1 et f2 soient situées dans une partie linéaire de la caractéristique résultante, c'est à dire à un niveau de 3dB au-delà et en-deçà des niveaux des fréquences f3 et f4 respectivement.

La correction recherchée est obtenue sans modification du temps de propagation de groupe dans la bande.

Afin de limiter au mieux l'atténuation apportée, on choisira avantageusement des filtres du premier ordre (atténuation de 20 dB par décade), surtout si la largeur de bande $\Delta f$ est importante.

La figure 6 représente un mode de réalisation préférentiel du dispositif de correction selon l'invention, les filtres utilisés étant du premier ordre.

Le signal d'entrée FI à corriger est appliqué, par l'intermédiaire d'un condensateur d'isolation 60, à une première voie de traitement comprenant en série une résistance 61, une diode PIN 62, une inductance 63 et un condensateur 64. La diode PIN 62 est utilisée en résistance variable, sa résistance interne étant fonction du niveau de tension du signal de commande SC appliqué par l'intermédiaire d'une inductance 71 de haute impédance. La cathode de la diode PIN 62 est reliée à l'inductance 63 formant, avec le condensateur 64, un filtre réjecteur de bande du premier ordre de fréquence centrale f3. Une inductance 65 est placée en parallèle du condensateur 64 pour permettre le passage du courant continu.

Le signal issu du condensateur 60 est également appliqué à une seconde voie de traitement comprenant en série une résistance 66, une diode PIN 67 et une inductance 68. Un condensateur 69 est placé en parallèle avec l'inductance 68 pour former un filtre passe-bande du premier ordre de fréquence centrale f4. La diode PIN 67 est également utilisée en résistance variable, sa résistance interne étant également fonction du niveau de tension du signal de commande SC.

Les résistances 61 et 66 sont destinées à l'étalonnage des coefficients de surtension des filtres réjecteur et passe-bande. Leurs valeurs sont préférentiellement identiques et déterminées en fonction de la penchette maximale à corriger. Les diodes PIN 62 et 67 sont également préférentiellement identiques.

Un autre condensateur d'isolation 70 est placé en sortie pour fournir le signal corrigé $\bar{F}I$. Le signal SFI est inexistant sur ce schéma car la structure retenue est entièrement parallèle. Il le serait si une isolation était prévue entre les résistances 61 et 66 et si le signal SC était appliqué indépendamment à ces deux résistances.

Le fonctionnement de ce mode de réalisation est le suivant : plus le niveau du signal SC est important, plus les diodes 62 et 67 sont conductrices. Les coefficients de surtension des filtres réjecteur et passe-bande sont alors importants, ce qui correspond à une forte pente de la partie linéaire de la caractéristique de la figure 5. La correction de penchette apportée est alors importante. En revanche, pour un niveau nul du signal de commande SC, les résistances présentées par les diodes 62 et 67 sont fortes, ce qui correspond à une pente faible, voire nulle, de la partie linéaire de la caractéristique de la figure 5. La correction de penchette apportée est alors faible, voire nulle.

Les coefficients de surtension des filtres sont égaux à $Q = L\omega/R = RC\omega$ avec la pulsation $\omega = 1/\sqrt{LC}$. L les valeurs des inductances 63 et 68, C les capacités des condensateurs 64 et 69 et R les résistances égales aux sommes respectives des résistances 61, 66 et des résistances internes des diodes 62 et 67. Les coefficients de surtension des deux filtres sont égaux.

La mise en cascade des filtres peut également consister à placer le filtre passe-bande en tête, suivi du filtre réjecteur de bande, l'essentiel étant que le filtre réjecteur de bande ait une fréquence centrale f3 inférieure ou égale à f1 et que le filtre passe-bande ait une fréquence centrale f4 supérieure ou égale à f2. Ainsi, la pente du filtre résultant a toujours une allure telle que celle représentée à la figure 5, opposée à la penchette du signal d'entrée FI.

A titre d'exemple, les fréquences f3 et f4 peuvent respectivement être égales à 100 MHz et 200 MHz pour une fréquence centrale f0 de 140 MHz et une largeur de bande $\Delta f$ de 40 MHz.

Le dispositif de commande générant le signal de commande SC peut être constitué par un microprocesseur convertissant une donnée représentative de la longueur du câble en un niveau de correction adéquat. La correction est dans ce cas déterminée une fois pour toutes, en fonction de la longueur du câble.

Il est également possible d'utiliser un estimateur de la caractéristique amplitude/fréquence du signal de sortie corrigé $\bar{F}I$, afin d'obtenir une correction auto-adaptative. Cependant, comme indiqué précédemment, afin de ne pas avoir à connaître très précisément la largeur de bande $\Delta f$ du signal à corriger et donc pour permettre de modifier le débit transmis, l'invention propose de réaliser un tel estimateur à l'aide d'un dispositif à commande automatique de gain, tel que celui représenté à la figure 7.

La figure 7 représente un dispositif à commande automatique de gain destiné à piloter le dispositif de correction selon l'invention.

Le signal de commande SC est ici un signal de commande automatique de gain issu d'un dispositif 72 de commande automatique de gain. Le signal corrigé $\bar{F}I$ est appliqué à un amplificateur 71 recevant également le signal SC. Le niveau du signal de sortie S est constant et indépendant de la longueur du câble utilisé.

Le dispositif 72 de commande automatique de gain comprend par exemple classiquement une diode de détection du niveau maximal du signal S. L'amplificateur 71 a un gain d'autant plus important que le niveau du signal I est faible. La correction de la penchette est donc ici obtenue grâce à l'exploitation d'un signal de commande automatique de gain.

Le signal SC peut éventuellement également être appliqué à un autre amplificateur destiné à amplifier le signal $\bar{F}I$ appliqué à l'entrée du dispositif de correction 1. De même, le dispositif de commande 72 peut être placé en amont du dispositif de correction 1.

Le signal d'entrée FI présentant une caractéristique d'atténuation en fonction de la fréquence croissante entre f1 et f2 peut également être un signal ayant transité par un milieu de transmission hertzien.

Bien entendu, la présente invention n'est pas limitée aux modes de réalisation décrits ci-dessus et l'homme du métier imaginera aisément d'autres solutions sans pour autant sortir du cadre de l'invention.

## Revendications

1. Dispositif de correction (1) de la caractéristique amplitude/fréquence d'un signal d'entrée (FI) de fréquence minimale f1, de fréquence centrale f0 et de fréquence maximale f2, ledit signal d'entrée (FI) présentant une caractéristique d'atténuation en fonction de la fréquence croissante entre f1 et f2, ledit dispositif de correction (1) comportant deux filtres (41, 42) en cascade, le premier desdits filtres recevant ledit signal d'entrée (FI) et fournissant un signal filtré (SFI) au second desdits filtres, le second desdits filtres fournissant un signal de sortie corrigé ($\tilde{F}$I), **caractérisé en ce que** l'un desdits filtres est un filtre réjecteur de bande (41) de fréquence centrale f3, avec f3 inférieur ou égal à f1 et **en ce que** l'autre desdits filtres est un filtre passe-bande (42) de fréquence centrale f4, avec f4 supérieur ou égal à f2, les fréquences centrales f3 et f4 respectant la relation :

$$f3 \times f4 = f0^2$$

lesdits filtres (41, 42) étant de même ordre et leurs coefficients de surtension (Q) étant réglés par un signal de commande (SC) issu d'un dispositif de commande (43).

2. Dispositif selon la revendication 1, **caractérisé en ce que** ledit signal de commande (SC) est un signal de commande automatique de gain issu d'un dispositif (72) de commande automatique de gain.

3. Dispositif selon l'une des revendications 1 et 2, **caractérisé en ce que** lesdits filtres (41, 42) sont du premier ordre.

4. Dispositif selon l'une des revendications 1 à 3, **caractérisé en ce que** lesdits filtres (41, 42) sont réalisés chacun à partir de cellules de type LC (63, 64 ; 68, 69).

5. Dispositif selon l'une des revendications 1 à 4, **caractérisé en ce que** lesdits filtres coopèrent chacun avec une diode de type PIN (62, 67).

6. Dispositif selon l'une des revendications 1 à 5, **caractérisé en ce que** ledit signal d'entrée (FI) est un signal ayant transité par un câble (40).

7. Egaliseur fréquentiel comprenant un dispositif de correction (1) selon l'une des revendications 1 à 6.

## Patentansprüche

1. Vorrichtung (1) zur Korrektur der Amplituden-Frequenzkennlinie eines Eingangssignals (FI) mit Minimalfrequenz f1, Mittenfrequenz f0 und Maximalfrequenz f2, wobei das Eingangssignal (FI) eine Kennlinie mit in Funktion der Frequenz zwischen f1 und f2 zunehmender Dämpfung hat, wobei die Korrekturvorrichtung (1) zwei hintereinander geschaltete Filter (41, 42) umfasst, der erste dieser Filter das Eingangssignal (FI) empfängt und ein gefiltertes Signal (SFI) an den zweiten der Filter liefert, der zweite dieser Filter ein korrigiertes Ausgangssignal ($\overline{F1}$) liefert, **dadurch gekennzeichnet, dass** der eine dieser Filter ein Bandunterdrückungsfilter (41) mit Mittenfrequenz f3 ist, wobei f3 kleiner oder gleich f1 ist, und dass der andere dieser Filter ein Bandpassfilter (42) mit Mittenfrequenz f4 ist, wobei f4 größer oder gleich f2 ist, wobei die Mittenfrequenzen f3 und f4 die Beziehung f3 x f4 = f0$^2$ erfüllen, die Filter (41, 42) von gleicher Ordnung sind und ihre Überspannungskoeffizienten (Q) von einem von einer Steuervorrichtung (43) ausgegebenen Steuersignal (SC) geregelt sind.

2. Vorrichtung nach Anspruch 1, **dadurch gekennzeichnet, dass** das Steuersignal (SC) ein automatisches Verstärkungssteuerungssignal, ausgegeben von einer automatischen Verstärkungssteuerungsvorrichtung (72), ist.

3. Vorrichtung nach einem der Ansprüche 1 und 2, **dadurch gekennzeichnet, dass** die Filter (41, 42) von erster Ordnung sind.

4. Vorrichtung nach einem der Ansprüche 1 bis 3, **dadurch gekennzeichnet, dass** die Filter (41, 42) jeweils ausgehend von LC-Zellen (63, 64; 68, 69) realisiert sind.

5. Vorrichtung nach einem der Ansprüche 1 bis 4, **dadurch gekennzeichnet, dass** die Filter jeweils mit einer PIN-Diode (62, 67) zusammenwirken.

6. Vorrichtung nach einem der Ansprüche 1 bis 5, **dadurch gekennzeichnet, dass** das Eingangssignal (FI) ein Signal ist, das ein Kabel (40) durchlaufen hat.

7. Frequenzausgleicher mit einer Korrekturvorrichtung (1) nach einem der Ansprüche 1 bis 6.

**Claims**

**1.** A device (1) for correcting the amplitude/frequency characteristic of an input signal (FI) having a minimum frequency f1, a center frequency f0 and a maximum frequency f2, said input signal (FI) having an attenuation as a function of frequency characteristic that increases between f1 and f2, said correction device (1) including two cascaded filters (41, 42), the first of said filters receiving said input signal (FI) and supplying a filtered signal (SFI) to the second of said filters, the second of said filters supplying said corrected output signal ($\bar{F}$I), **characterized in that** one of said filters is a band-stop filter (41) having a center frequency f3 less than or equal to f1 and **in that** the other of said filters is a band-pass filter (42) having a center frequency f4 greater than or equal to f2, the center frequencies f3 and f4 satisfying the equation:

$$f3 \times f4 = f0^2$$

said filters (41, 42) being of the same order and their Q-factor (Q) being adjusted by a control signal (SC) from a control device (43).

**2.** A device according to claim 1, **characterized in that** said control signal (SC) is an automatic gain control signal from an automatic gain control device (72).

**3.** A device according to either claim 1 or claim 2, **characterized in that** said filters (41, 42) are first order filters.

**4.** A device according to any one of claims 1 to 3, **characterized in that** said filters (41, 42) are each based on LC networks (63, 64; 68, 69).

**5.** A device according to any one of claims 1 to 4, **characterized in that** said filters each co-operate with a PIN diode (62, 67).

**6.** A device according to any one of claims 1 to 5, **characterized in that** said input signal (FI) is a signal that has passed through a cable (40).

**7.** A frequency equalizer including a correction device (1) according to any one of claims 1 to 6.

# FIG.1

# FIG.2

# FIG.3

# FIG.4

# FIG.5

# FIG.6

# FIG.7